# EUROPÄISCHE PATENTSCHRIFT

(11) **EP 3 218 167 B1**
(45) Veröffentlichungstag und Bekanntmachung des Hinweises auf die Patenterteilung: **05.08.2020**
(21) Anmeldenummer: 15794509.8
(22) Anmeldetag: 05.11.2015
(51) Int. Cl.: B29C 64/153, B29C 64/393

(54) **PRODUKTIONSANLAGE ZUR SIMULTANEN, GENERATIVEN HERSTELLUNG VON MEHREREN BAUTEILEN**
PRODUCTION SYSTEM FOR THE SIMULTANEOUS, ADDITIVE MANUFACTURING OF SEVERAL COMPONENTS
INSTALLATION DE PRODUCTION POUR LA FABRICATION ADDITIVE ET SIMULTANÉE DE PLUSIEURS COMPOSANTS

(30) Priorität: 13.11.2014 DE 102014016718
(43) Veröffentlichungstag der Anmeldung: 20.09.2017
(60) Teilanmeldung: 20182183.2
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2015/075829
(87) Internationale Veröffentlichungsnummer: WO 2016/075025

(56) Entgegenhaltungen:
- WO-A2-2010/112213
- DE-A1- 19 939 616
- DE-A1-102008 060 046
- DE-A1-102012 003 160

## Beschreibung

Die Erfindung betrifft eine Produktionsanlage, mit der simultan und auf generative Weise mehrere Bauteile mittels eines selektiven Lasersinter- oder eines Laserschmelzverfahrens hergestellt werden können. Die Herstellung läuft in einem Produktionsanlagebereich ab, in dem wenigstens zwei Bauvorrichtungen in Form von Lasersinter- oder Laserschmelzvorrichtungen vorgesehen werden. Derartige Vorrichtungen werden in der Regel als SLM- oder SLS-Vorrichtungen bezeichnet und umfassen in der Regel einen aus einer Prozesskammer der Vorrichtung entnehmbaren Baucontainer.

In dem Baucontainer ist eine höhenverfahrbare Plattform angeordnet, auf die mittels eines Beschichters ein verschmelz- oder sinterfähiges Baumaterial aufgetragen wird. Schichtweise wird durch einen über einen Scanner zugeführten Laserstrahl die Baumaterialschicht gesintert oder verschmolzen und dabei verfestigt. Auf diese teilverfestigte Schicht wird eine nächste Schicht aufgetragen und der Lasersinter- oder Laserschmelzvorgang so lange wiederholt, bis das dreidimensionale Bauteil fertiggestellt ist.

Nach Fertigstellung erfolgt eine Entnahme des fertigen oder zumindest teilfertigen Bauteils aus dem Baucontainer in einer Entnahmestation. Eine Entnahmestation dient dazu, das nicht verfestigte Baumaterial aus dem Baucontainer zu entnehmen und vorschriftsmäßig abzuführen und dergleichen. Dann kann das Bauteil in eine Nachbearbeitungsstation zur thermischen oder oberflächlich mechanischen Nachbearbeitung verbracht werden. Sobald das Werkstück fertig ist, kommt es in einen Lagebereich zur Lagerung der Bauteile.

In der Regel arbeiten all die genannten Vorrichtungen für sich gesehen autark, d. h. ein Bauteil wird in einer Bauvorrichtung fertiggestellt, durch eine Bedienungsperson wird dann der Behälter entnommen. Das Bauteil wird manuell oder teilautomatisiert in einer Entnahmestation entpackt, das entpackte Bauteil wird dann manuell von einer Bedienungsperson in eine Nachbearbeitungsstation verbracht, dort installiert, der Nachbearbeitungsprozess durchgeführt und dann wird das Bauteil durch eine Bedienungsperson in ein Lager gebracht, wo es dann zum Versand fertiggemacht wird.

Jede der genannten Vorrichtungen weist in der Regel eine gesonderte elektronische Steuerung auf, ein in einem Produktionsbearbeitungsbereich tätiger Mitarbeiter ist gezwungen, sich jeweils nach Abschnitt eines Fertigungs- oder Entnahmeschritts zu erkundigen, welche der weiteren Vorrichtungen in dem Produktionsbearbeitungsbereich frei ist für weitere Bearbeitungsschritte, welche Vorrichtung ausreichend Baumaterial umfasst, um einen neuen Bauvorgang zu starten, welcher Lagerbereich geeignet ist, um ein Bauteil aufzunehmen und dergleichen.

DE 10 2008 060 046 A1 offenbart ein Verfahren zum Bereitstellen einer Pulvermenge für das Lasersintern und ein Verfahren zur Herstellung eines dreidimensionalen Objekts mittels Lasersintern.

DE 10 2012 003 160 A1 offenbart eine Vorrichtung zu einer automatisierten Entnahme von Bauteilen aus einem Behälter und zu einer Vereinzelung der Bauteile.

WO 2010/112213 A1 offenbart einen Transportcontainer zur Verwendung in einer Vorrichtung zur Herstellung eines dreidimensionalen Objekts durch selektives Verfestigen eines schichtweise aufgetragenen Aufbaumaterials.

DE 199 39 616 A1 offenbart eine Vorrichtung und ein Verfahren zur generativen Herstellung eines dreidimensionalen Objekts.

Es ist Aufgabe der Erfindung, eine eingangs genannte Produktionsanlage so auszubilden, dass in ihr mehr oder weniger voll automatisch die einzelnen Herstellungs-, Entpackungs-, Bestückungs-, Nachbearbeitungs- und Transportschritte ablaufen können, dass die in der Produktionsanlage vorzusehenden Einzelvorrichtungen vereinfacht ausgebildet werden können und der gesamte Produktionsablauf mit den genannten Einzelschritten schneller durchführbar ist. Diese Aufgabe wird durch die Kombination der Merkmale des Anspruchs 1 gelöst. Vorteilhafte Weiterbildungen ergeben sich aus den Unteransprüchen.

Zunächst ist in der Produktionsanlage eine Produktionsanlagensteuervorrichtung vorgesehen, die mit den Bauvorrichtungen, der wenigstens einen Entnahmestation, der wenigstens einen Nachbearbeitungsstation und dergleichen zusammenwirkt und die zur Steuerung der Vorrichtung sowie zur Abfrage des Betriebsstatus und der zeitlichen Verfügbarkeit der Vorrichtungen sowie zur Abfrage der in den Vorrichtungen verfügbaren Baumaterialmengen und -art ausgebildet ist.

Dies bedeutet zunächst, dass die Anlagensteuereinrichtung geeignet ist, mit den Bauvorrichtungen zusammenzuwirken. Alle Bauvorrichtungen können von dieser Anlagensteuereinrichtung quasi wie von einer Produktionswarte aus von nur einer Bedienungsperson beaufsichtigt werden. Die Bauvorrichtungen selbst, d. h. die Lasersinter- oder Laserschmelzanlagen, müssen nicht mehr mit gesonderten Eingabevorrichtungen oder Displays versehen werden, sie können damit einfacher und kostengünstiger hergestellt werden.

Darüber hinaus entfällt eine Kontrolle durch eine Bedienungsperson, wie viel Baumaterial in einer Anlage noch vorhanden ist. Eine Anlage, die für den nächsten Bauvorgang nicht ausreichend Baumaterial beinhaltet, kann z. B. über eine automatische Nachfülleinrichtung befüllt werden, was auch durch die Produktionsanlagensteuereinrichtung vorgenommen werden kann. Die Bedienungsperson, die an der Produktionsanlagensteuereinrichtung arbeitet, übersieht mit einem Blick auf einem Display, welche der Bauvorrichtung zur Verfügung steht, wieviel Baumaterial sie beinhaltet, um welches Baumaterial es sich handelt. Die Bedienungsperson bekommt ein Feedback von der Vorrichtung, ob das Baumaterial für den nächsten Bauvorgang, der ebenfalls an der "Steuerwarte" eingegeben und gestartet werden kann, für den nächsten Bauvorgang ausreichend ist.

Ein weiteres wesentliches Merkmal der Anlage besteht darin, die Baucontainer, die aus den Bauvorrichtungen entnehmbar sind, durch selbst angetriebene und durch die Produktionsanlagensteuervorrichtung gelenkte und gesteuerte Transportmittel automatisch aufzunehmen, zu einer Vorrichtung oder Station der Anlage zu transportieren und dort z. B. in eine Prozesskammer einzusetzen, automatisch zu verriegeln oder nach Abschluss eines Bauprozesses auch wieder zu entriegeln, aufzunehmen und zu einer weiteren Station, z. B. einer Zwischenlagerstation oder Entnahmestation zu verbringen und in diese einzusetzen. Die Transportmittel im Rahmen der Erfindung sind entweder selbst angetriebene Transportwagen, die am Boden fahren und beliebig steuerbar sind oder sind als Transport-Fluggeräte ausgebildet, wobei die Fluggeräte z. B. Quatrokopter oder Optokopter sein können, d. h. hubschrauberähnlich ausgebildete Geräte, die heute auch als "Drohnen" bezeichnet werden und geeignet sind, entsprechende Lasten aufzunehmen.

Derartige Fluggeräte haben sich heute in den breitesten Einsatzbereichen bewährt und sind in der Lage, auch relativ hohe Lasten aufzunehmen und sehr präzise an einem Bestimmungsort zu verbringen und dort abzusetzen.

Mit anderen Worten wird nicht nur eine Überwachung der Bauvorrichtungen vorgenommen, sondern auch deren Beschickung mit Baucontainern, Bauteilen, Bauplatten oder Baumaterial die Entnahme der Baucontainer nach einem Bauvorgang, das Verbringen der Baucontainer zu einer Entnahmestation oder einem Lagerplatz und dergleichen. Auch all dies ist zentral durch die Produktionswarte steuerbar.

Nur eine Bedienungsperson kann z. B. festlegen, welcher Baucontainer zu welcher Bauvorrichtung verbracht wird, welches Material in dem Baucontainer verbaut wird, zu welcher Entnahmestation der Baucontainer mit dem fertiggestellten Bauteil gefahren oder geflogen wird, ob dieses Bauteil zusammen mit dem Baumaterial in einer Inertgasatmophäre unter Ausschluss von Explosionsgefahr entpackt werden kann und dergleichen. All diese Produktionsschritte können zentral über die Produktionsanlagensteuervorrichtung vorgenommen werden. Dazu weist die Produktionsanlagensteuervorrichtung eine Eingabevorrichtung und wenigstens ein Display auf. Damit können Steuerdaten für die Gesamtheit der Produktionsanlage, d. h. für die Bauvorrichtungen, die Entnahmestation, Nachbearbeitungsstationen und dergleichen eingegeben werden, beginnend vom Baumaterial über Baudaten bis hin zu Kundendaten und dem Versandzielort, der ausschlaggebend sein kann für den Lagerort, zu dem das fertige Bauteil verbracht wird.

Besonders vorteilhaft ist es, wenn jedes selbstangetriebene Transportmittel eine durch die SLM- oder SLS-Vorrichtung, die Entnahmestation, die Nachbearbeitungsstation und die Produktionsanlagensteuervorrichtung lesbare elektronische Codierung aufweist. Auf diese Weise wird eine Kontrolle ermöglicht, die einer Bedienungsperson, auf übersichtliche Weise Kenntnis verschafft, welche Komponente der gesamten Produktionsanlage sich wo, zu welchem Zeitpunkt befindet. All dies kann auf einem Display dargestellt und in einem Speicher protokolliert werden, um den gesamten Produktionsablauf auf transparente Weise später nachvollziehen zu können, was für eine Qualitätssicherung der oftmals teuren und empfindlichen Bauteile wesentlich oder zumindest vorteilhaft ist.

Die Produktionsanlagensteuervorrichtung kann dabei mit einer Empfangseinrichtung versehen sein, durch welche von den Baucontainern ausgesandte werkstückspezifische Daten lesbar sind. Diese Daten können z. B. beim Bauvorgang in einen Speicher des Baucontainers eingelesen werden und sind dann von dort jeweils abrufbar.

Vorteilhafter Weise umfasst die gesamte Produktionsanlage eine Mehrzahl von derartigen selbst angetriebenen Transportmitteln. Wenigstens ein Teil dieser Transportmittel ist mit Aufnahme- und Lagervorrichtungen für entpackte Bauteile versehen, außerdem können Roboterarme und dergleichen für das Handling dieser Bauteile oder von in Containern einzusetzende Bauplatten auf oder an den Transportmitteln vorgesehen werden, um die Bauteile oder Bauplatten aus den Baucontainern zu entnehmen bzw. in diese einzusetzen, zu drehen, zu wenden und z. B. in eine Nachbearbeitungsstation auf einem entsprechenden Justiersockel aufzusetzen.

Die Transportmittel können auch Antriebe für die Höhenverstellung von Trägerplatten haben, die in den auf oder an ihnen angeordneten Baucontainern höhenverlagerbar angeordnet sind, um z. B. im Bereich einer Entnahmestation ein fertiges Bauteil sowie nicht verfestigtes Baumaterial aus einem Baucontainer herauszuheben und weiter zu fördern.

In Weiterbildung der Erfindung wird nicht nur die Verfügbarkeit der Anlagenkomponenten für weitere Produktionsschritte abgefragt oder der Füllstand von Dosier- und Vorratsbehältern von Baumaterial, die Produktionsanlagensteuervorrichtung ist auch in der Lage, z. B. Bauplattenhandlings- und Justiereinrichtungen zu steuern, durch welche Bauplatten vollautomatisch auf den höhenverstellbaren Trägern von Baucontainern platzierbar und dort befestigbar sind und in eine Solllage einjustiert werden können. Die Justierdaten dieser Vorrichtungen können ebenfalls in einem Speicher der Produktionsanlagensteuervorrichtung abgespeichert werden. Es liegt auch im Rahmen der Erfindung, dass die Produktionsanlagensteuervorrichtung einen zeitlichen Produktionsplan berücksichtigt, durch welchen z. B. eine termingerechte Fertigstellung und/oder Auslieferung eines bestellten Bauteils vorgegeben wird.

Die Erfindung ist anhand eines vorteilhaften Ausführungsbeispiels in den Zeichnungsfiguren näher erläutert. Diese zeigen:

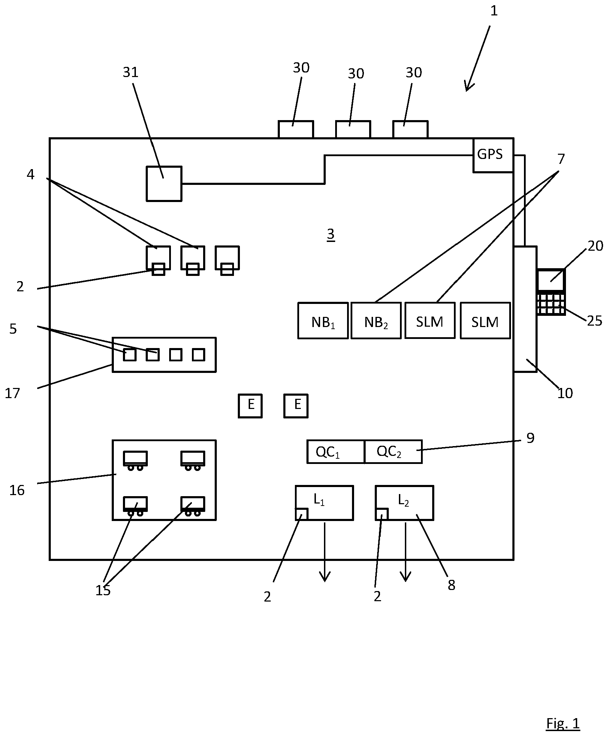

- Fig. 1: eine schematische, stark vereinfachte Darstellung eines Produktionsbearbeitungsbereichs mit einer Mehrzahl von unterschiedlichen Vorrichtungen;
- Fig. 2: eine schematische Darstellung eines durch die Produktionsanlagensteuervorrichtung lenkbaren Transportwagen mit aufgesetztem Baucontainer;
- Fig. 3: eine schematische Darstellung von durch die Produktionsanlagensteuervorrichtung lenkbaren Transportwagen mit aufgesetztem Bauteil auf einer Spannvorrichtung sowie mit einem auf dem Transportwagen angeordneten fernsteuerbaren Roboterarm;

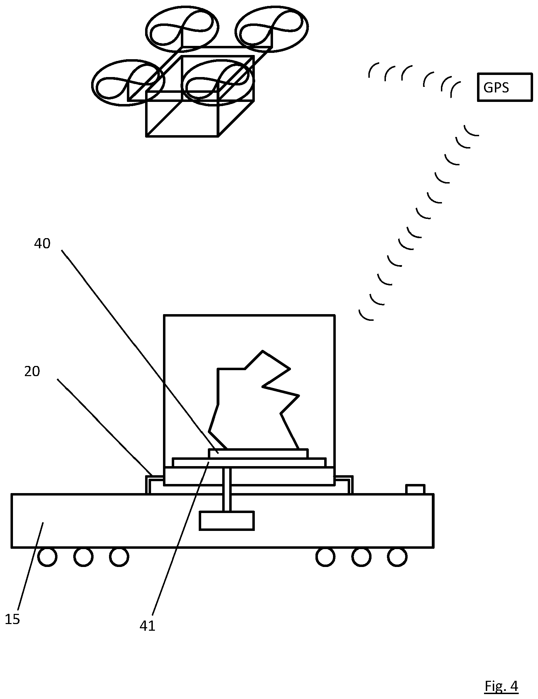

- Fig. 4: eine schematische Darstellung eines Transportwagens und eines Transportfluggeräts mit angekoppeltem Baucontainer.

Zunächst wird auf Zeichnungsfigur 1 Bezug genommen. Die Produktionsanlage 1 ist zur simultanen und generativen Herstellung von Bauteilen 2 vorgesehen und weist einen Produktionsbearbeitungsbereich 3, in dem wenigstens zwei SLS- und/oder SLM-Vorrichtungen 4 vorgesehen sind, die jeweils einen aus einer Prozesskammer der Vorrichtungen 4 entnehmbaren Baucontainer 5 aufweisen. Darüber hinaus ist in dem Produktionsbearbeitungsbereich 3 wenigstens eine Entnahmestation vorgesehen, in dem aus einem Baucontainer 5 ein fertig gestelltes Bauteil 2 entnommen werden kann. Ferner ist in dem Produktionsbearbeitungsbereich 3 wenigstens eine Nachbearbeitungsstation 7 zur thermischen und/oder oberflächlich mechanischen Nachbehandlung fertig gestellter entnommener Bauteile vorgesehen sowie ein Lagerbereich 8, in dem die Bauteile 2 zur Auslieferung verbracht und zwischengelagert werden können.

Alle Anlagenkomponenten des Produktionsbearbeitungsbereichs 3 sind an eine Produktionsanlagensteuervorrichtung 10 angeschlossen, die zur Steuerung der jeweiligen Vorrichtungen 4, 6, 7 sowie zur Abfrage des jeweiligen Betriebsstatus und der zeitlichen Verfügbarkeit der Vorrichtungen und zur Abfrage der in den Vorrichtungen verfügbaren oder vorhandenen Baumaterialmengen und -art ausgebildet ist. Für die SLS- oder SLM-Vorrichtungen 4 bedeutet dies, dass abgefragt wird, ob ausreichend Baumaterial zur Verfügung steht, um den nächsten Baujob durchzuführen. Für die Entnahmestationen bedeutet dies hingegen, dass abgefragt wird, ob noch ausreichend Platz für abzusaugendes Pulver in Pulverbehältern ist, damit ein Entnahmevorgang vorschriftsmäßig und ohne Kontamination eines Umgebungsbereichs mit Baumaterial durchgeführt werden kann.

Auch wenigstens eine Qualitätskontrolleinrichtung 9 kann an die Produktionsanlagensteuervorrichtung 10 angeschlossen werden, derartige Kontrollvorrichtungen können z. B. darin bestehen, dass elektronisch die äußere Form eines Bauteils abgescannt wird, dessen Dichte bestimmt wird, dessen Gewicht gemessen wird und dergleichen, wobei die Qualität der Bauteile auf unterschiedlichste Weise eingeschätzt werden kann.

Die Baucontainer 5 werden im Produktionsbearbeitungsbereich 3 durch selbst angetriebene und durch die Produktionsanlagensteuervorrichtung 10 lenkbare Transportmittel 15 automatisch aufgenommen, zu einer Vorrichtung 4, 6, 7, 8, 9 transportiert und z.B. dort in eine Anlagenkomponente, wie z.B. die Prozesskammer, eingesetzt und automatisch verriegelt.

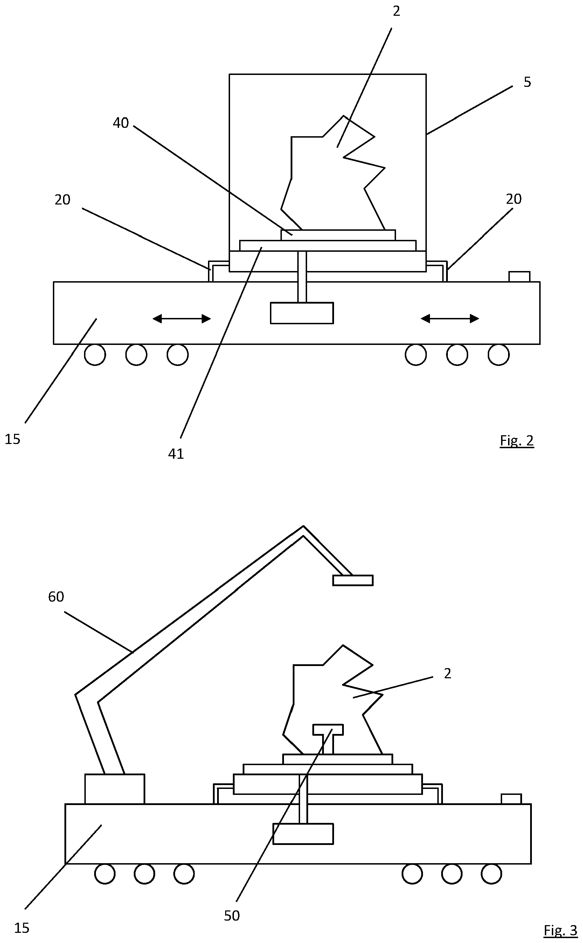

Nach Abschluss eines generativen Bauprozesses in einer SLS- oder SLM-Vorrichtung 4 werden die Baucontainer 5 durch einen selbst fahrendes Transportmittel 15 unter automatischer Entriegelung automatisch aufgenommen und programmgesteuert zu einer Zwischenlagerstation oder Entnahmestation 6 verfahren und dort in diese eingesetzt. Die Baucontainer 5 werden über wenigstens eine an ihnen angeordnete Kopplungsvorrichtung 20 (siehe Fig. 2) auf dem Transportmittel 15 befestigt und können z. B. durch Höhenverlagerung mit Verriegelungselementen einer SLM- oder SLS-Vorrichtung 4 in Eingriff gebracht werden, wobei die Kopplungsvorrichtung 20 zwischen Transportmittel 15 und Baucontainer 5 programmgesteuert gelöst wird.

Die Produktionsanlagensteuereinrichtung 10 umfasst wenigstens eine Eingabevorrichtung 25 und ein Display 26, sie ist damit wie eine Steuerwarte für den Produktionsbearbeitungsbereich 3 ausgebildet.

In Weiterbildung der Erfindung weist jedes selbst angetriebene Transportmittel 15 eine durch die SLM- oder SLS-Vorrichtungen 4, die Entnahmestation 6, die Nachbearbeitungsstation 7 oder die Produktionsanlagensteuereinrichtung 10 lesbare elektronische Codierung auf, wobei die Produktionsanlagensteuereinrichtung 10 mit einer Empfangseinrichtung versehen ist, durch welche von den Baucontainern 5 ausgesandte werkstück-spezifische Daten lesbar sind. Dies führt in vorteilhafter Weise dazu, dass über die Produktionsanlagensteuereinrichtung 10 zu jeder Zeit überprüfbar ist, auf welchem Transportmittel 15 welcher Baucontainer 5 und damit welches Bauteil 2 transportiert wird. Die Produktionsanlagensteuereinrichtung 10 ist damit in der Lage, die selbstangetriebenen Transportmittel 15 zum Transport der Baucontainer 5 abhängig von den Werkstückdaten zu steuern. Damit wird sichergestellt, dass ein Baucontainer 5 z. B. zur thermischen Nachbehandlung in eine Wärmebehandlungsvorrichtung überführt wird, dort ein entsprechender Wärmebehandlungsschritt durchgeführt wird und dann das so "getemperte" Bauteil 2 zu einer Zwischenlagerstation oder zu einem Lagerbereich 8 verbracht wird.

Die Anlage umfasst eine Mehrzahl von selbstangetriebenen Transportwagen, die in einem Transportwagenparkbereich 16 zum Abruf geparkt sein können. Es liegt im Rahmen der Erfindung, die dort geparkten Transportmittel 15 bereits mit aufgesattelten Baucontainern 5 vorzusehen, damit bei Bedarf ein Transportmittel 15 mit einem Baucontainer 5 schnell zu einer SLM- oder SLS-Vorrichtung 4 verbracht werden kann. Darüber hinaus ist es im Rahmen der Erfindung auch möglich, ein Baucontainerreservoir 17 vorzusehen, in dem eine Mehrzahl von gleichen oder unterschiedlichen Baucontainern 5 bevorratet sein kann.

Durch die Zentralsteuerung der Anlagenkomponenten durch die Produktionsanlagensteuereinrichtung 10 können die einzelnen Vorrichtungen, insbesondere die SLM- oder SLS-Vorrichtungen 4 vereinfacht, d. h. ohne gesonderte Eingabe- und Displayvorrichtungen ausgebildet werden, was deren Herstellungskosten deutlich reduziert.

Die Produktionsanlagensteuereinrichtung 10 umfasst eine Verfügbarkeitsüberprüfungseinrichtung für die in der Produktionsanlage 1 enthaltenen Vorrichtungen. Die selbstangetriebenen Transportmittel 15 sowie die von ihnen getragenen Baucontainer 5 werden abhängig von einer Verfügbarkeitsprüfung der in der Produktionsanlage 1 vorhandenen Vorrichtungen 4, 6, 7, 8, 9 gesteuert. Dabei werden durch die Produktionsanlagensteuereinrichtung 10 der Füllstand von Dosier- oder Vorratsbehältern von Baumaterial in den SLM- oder SLS-Vorrichtungen überwacht und zur Abgabe eines Nachfüllsteuersignals für mit den Vorrichtungen verbundenen Nachfülleinrichtungen ausgebildet. Die Nachfülleinrichtungen umfassen Vorratsbehälter 30 mit unterschiedlichen Baumaterialarten sowie eine Pulvertransportvorrichtung 31, die von den Vorratsbehältern 30 zu den SLS- oder SLM-Vorrichtungen 4 fährt und dort Baumaterial absetzt. In gleicher Weise ist es denkbar, einen Pulvertransport von den Entnahmestationen zu einer Pulverentsorgungs- oder Reinigungs-/Siebanlage vorzusehen, die nicht im Einzelnen dargestellt ist.

Darüber hinaus kann die Produktionsanlagensteuereinrichtung 10 auch mit einer Bauplattenhandlings- und Justiereinrichtung verbunden, durch welche Bauplatten 40 vollautomatisch auf höhenverstellbaren Trägern der Baucontainer 5 platzierbar und befestigbar und in eine Solllage einjustierbar sind. Das Handling der Bauplatten 40, von denen eine auf einem höhenverstellbaren Träger 41 eines Baucontainers 5 dargestellt ist, kann durch Roboterarme oder dergleichen erfolgen, die Produktionsanlage 1 kann einen Lagerbereich für unterschiedliche Bauplatten 40 umfassen, die von Transportmitteln 15 mit einem Roboterarm aufgenommen werden können und in Container eingesetzt und dort automatisch justiert werden können. Eine automatische Justierung kann entweder optisch oder mechanisch durch Sensoren durchgeführt werden. Die Daten unterschiedlicher Bauplatten 40 sind ebenfalls in der Produktionsanlagensteuereinrichtung 10 abgespeichert.

Darüber hinaus ist zur Qualitätskontrolle eine Abspeicherung thermischer Daten betreffend den Schmelzprozess in einer jeden SLM- oder SLS-Anlage abspeicherbar und darstellbar.

Zusätzlich ist es denkbar, dass für den Fall explosionskritischer Baumaterialien die Produktionsanlagensteuereinrichtung 10 so ausgebildet und programmiert ist, dass sie eine ordnungsgemäße Inertisierung und/oder Flutung von Pulverabsaugeinrichtungen oder Entnahmestationen 6 umfasst.

In Zeichnungsfigur 3 ist ein Transportwagen 15a dargestellt, auf dem eine Zentriervorrichtung 50 angeordnet ist, auf der ein bereits entpacktes Bauteil 2 in definierter Solllage gehalten werden kann. Der Transportwagen 15a kann damit in einen Nachbearbeitungsbereich einfahren, um z. B. eine oberflächliche Nachbearbeitung des Bauteils 2 vorzunehmen. Ein Roboterarm 60 ist geeignet, ein Bauteil 2 aus einem Baucontainer 5 zu entnehmen und auf die Zentriervorrichtung 50 aufzusetzen bzw. wieder von dieser zu lösen und dann z. B. in einem Lagerbereich 8 abzusetzen.

In Zeichnungsfigur 4 ist zusätzlich zu einem Transportwagen 15a rein schematisch ein Transportfluggerät 15b dargestellt, an dem ein Baucontainer 5 angekoppelt ist. Der Baucontainer 5 wird durch eine Kopplungsvorrichtung an der Unterseite des Transportfluggeräts 15b gehalten. Das Transportfluggerät 15b ist im vorliegenden Fall als Quatrokopter dargestellt und ebenfalls über das Hallen-GPS steuerbar ebenso wie die Transportwagen 15a.

### BEZUGSZEICHENLISTE

- 1: Produktionsanlage
- 2: Bauteil
- 3: Produktionsanlagenbereich
- 4: SLM/SLS-Vorrichtung
- 5: Baucontainer
- 6: Entnahmestation
- 7: Nachbearbeitungsstation
- 8: Lagerbereich
- 9: Qualitätskontrolleinrichtung
- 10: Produktionsanlagensteuervorrichtung

- 15: Transportmittel
- 15a: Transportwagen
- 15b: Transportfluggerät
- 16: Transportwagenparkbereich
- 17: Baucontainerreservoir

- 20: Kopplungsvorrichtung

- 25: Eingabevorrichtung
- 26: Display

- 30: Vorratsbehälter
- 31: Pulvertransportvorrichtung

- 40: Bauplatten
- 41: Träger

- 50: Zentriervorrichtung

- 60: Roboterarm

## Patentansprüche

1. Produktionsanlage (1) zur simultanen, generativen Herstellung von mehreren Bauteilen (2) mittels selektiver Laser-Sinterverfahren oder Laser-Schmelzverfahren, wobei in wenigstens einem Produktionsbearbeitungsbereich (3) vorgesehen sind:
- wenigstens zwei Bauvorrichtungen in Form von SLM- und/oder SLS-Vorrichtungen (4), die jeweils mindestens einen aus einer Prozesskammer der Vorrichtungen entnehmbaren Baucontainer (5) aufweisen,
- wenigstens eine Entnahmestation (6) zum Entpacken eines fertiggestellten Bauteils (2) aus einem der Baucontainer (5);
- wenigstens eine Nachbearbeitungsstation (7) zur thermischen und/oder oberflächlich mechanischen Nachbehandlung fertiggestellter entnommener Bauteile (2) und
- wenigstens ein Lagerbereich (8) zur Lagerung der Bauteile (2),
- selbstangetriebene und durch die Produktionsanlagensteuervorrichtung (10) lenkbare und steuerbare Transportmittel (15), sowie
- eine Produktionsanlagensteuervorrichtung (10), an die die Bauvorrichtungen, die Entnahmestation (6) und die Nachbearbeitungsstationen (7) angeschlossen sind und die zur Steuerung der Vorrichtungen oder Stationen sowie zur Abfrage des Betriebsstatus und der zeitlichen Verfügbarkeit der Vorrichtungen oder Stationen, sowie zur Abfrage der in den Bauvorrichtungen verfügbaren Baumaterialmengen und -art ausgebildet ist,
- wobei entweder die Baucontainer (5) und/oder aus diesen herausgelöste fertiggestellte Bauteile (2) oder in die Baucontainer (5) einzusetzende Bauplatten (40) durch die durch die Produktionsanlagensteuervorrichtung (10) gelenkten und gesteuerten Transportmittel (15) automatisch aufgenommen werden, zu einer Vorrichtung oder Station transportiert werden, dort entweder in eine Prozesskammer eingesetzt und automatisch verriegelt werden oder in eine Nachbearbeitungsstation (7) eingesetzt werden, wobei
- die Baucontainer (5) oder die Bauteile (2) nach Abschluss eines generativen Bauprozesses durch ein selbstangetriebenes Transportmittel (15) unter automatischer Entriegelung automatisch aufgenommen und programmgesteuert zu einer Zwischenlagerstation oder Entnahmestation (6) verfahren werden und in diese eingesetzt werden, und
- wobei die Baucontainer (5) oder Bauteile (2) oder Bauplatten (40) über wenigstens eine Kopplungsvorrichtung (20) auf oder an den Transportmitteln (15) befestigt werden und mit Verriegelungselementen einer Bauvorrichtung, einer Nachbehandlungsstation (7) oder eines höhenverfahrbaren Trägers (41) eines Baucontainers (5) in Eingriff gebracht werden sowie die Kopplungsvorrichtung (20) zwischen Transportmittel (15) und Baucontainer (5), Bauteil (2) oder Bauplatte (40) programmgesteuert gelöst wird, wobei die Transportmittel (15) entweder als Transportwagen (15a) oder als Transport-Fluggeräte (15b) ausgebildet sind.

2. Produktionsanlage nach Anspruch 1, **dadurch gekennzeichnet, dass** die Produktionsanlagensteuervorrichtung (10) eine Eingabevorrichtung (25) und/oder ein Display (26) aufweist, wobei über die Eingabevorrichtung (25) Steuerdaten für die Gesamtheit der in der Produktionsanlage (1) vorhandenen Bauvorrichtungen, Entnahmestationen (6), Nachbearbeitungsstationen (7) eingebbar sind und wobei auf dem Display (26) sowohl produktionsanlagenspezifische Daten der gesamten Produktionsanlage (1) sowie ihrer Einzelkomponenten darstellbar sind.

3. Produktionsanlage nach Anspruch 1 oder 2, **dadurch gekennzeichnet, dass** jedes selbst angetriebene Transportmittel (15) eine durch die Bauvorrichtungen, die Entnahmestation (6), die Nachbearbeitungsstation (7) und/oder die Produktionsanlagensteuervorrichtung (10) lesbare elektronische Codierung aufweist.

4. Produktionsanlage nach einem der vorhergehenden Ansprüche, **dadurch gekennzeichnet, dass** die Produktionsanlagensteuervorrichtung (10) mit einer Empfangseinrichtung versehen ist, durch welche von den Baucontainern (5) ausgesandte werkstückspezifische Daten gelesen werden.

5. Produktionsanlage nach einem der vorhergehenden Ansprüche, **dadurch gekennzeichnet, dass** die Produktionsanlagensteuervorrichtung (10) die selbstangetriebenen Transportmittel (15) zum Transport der Baucontainer (5) abhängig von den Werkstückdaten steuert.

6. Produktionsanlage nach einem der vorhergehenden Ansprüche, **dadurch gekennzeichnet, dass** sie eine Mehrzahl von selbstangetriebenen Transportmitteln (15) umfasst, wobei wenigstens ein Teil dieser Transportmittel (15) mit Aufnahme- oder Lagervorrichtungen oder Kopplungseinrichtungen für entpackte Bauteile versehen ist.

7. Produktionsanlage nach einem der vorhergehenden Ansprüche, **dadurch gekennzeichnet, dass** die Bauvorrichtungen der Produktionsanlage (1) ohne gesonderte Eingabe- und Displayvorrichtungen ausgebildet sind.

8. Produktionsanlage nach einem der vorhergehenden Ansprüche, **dadurch gekennzeichnet, dass** die Produktionsanlagensteuervorrichtung (10) mit einer Verfügbarkeits- Überprüfungseinrichtung für die in der Produktionsanlage (1) enthaltenen Vorrichtungen versehen ist und die selbstangetriebenen Transportmittel (15) die an ihnen angekoppelten Baucontainer (5) oder Bauteile (2) abhängig von einer Verfügbarkeitsprüfung der in der Produktionsanlage (1) vorhandenen Vorrichtungen automatisch durch die Produktionsanlagensteuerungsvorrichtung (10) gesteuert werden.

9. Produktionsanlage nach einem der vorhergehenden Ansprüche, **dadurch gekennzeichnet, dass** die Produktionsanlagensteuerungsvorrichtung (10) den Füllstand von Dosier- und/oder Vorratsbehältern (30) von Baumaterial (2) in den Bauvorrichtungen überwacht und zur Abgabe eines Nachfüll-Steuersignals für die mit den Vorrichtungen verbundenen oder mit den Transportmitteln (15) zu diesen verfahrbaren Nachfülleinrichtungen ausgebildet ist.

10. Produktionsanlage nach einem der vorhergehenden Ansprüche, **dadurch gekennzeichnet, dass** die Produktionsanlagensteuervorrichtung (10) mit einer Bauplattenhandlings- und Justiereinrichtung verbunden ist, durch welche Bauplatten (40) vollautomatisch auf höhenverstellbaren Trägern (41) von Baucontainern (5) platziert und befestigt werden sind und in eine Solllage einjustiert werden.

11. Produktionsanlage nach einem der vorhergehenden Ansprüche, **dadurch gekennzeichnet, dass** die Daten unterschiedlicher Bauplatten (40) in der Produktionsanlagensteuervorrichtung (10) abgespeichert werden.

12. Produktionsanlage nach einem der vorhergehenden Ansprüche, **dadurch gekennzeichnet, dass** in der Produktionsanlagensteuervorrichtung (10) thermische Daten betreffend den Schmelzprozess in einer jeden SLM-Anlage abgespeichert und dargestellt werden.

13. Produktionsanlage nach einem der vorhergehenden Ansprüche, **dadurch gekennzeichnet, dass** die Transportmittel (15) der Produktionsanlage (1) durch ein Hallen-GPS-System gesteuert werden.

14. Produktionsanlage nach einem der vorhergehenden Ansprüche, **dadurch gekennzeichnet, dass** in der Produktionsanlage integrierte oder verwendete Pulverabsaugeinrichtungen an die Produktionsanlagensteuervorrichtung angeschlossen sind und von dieser auf ordnungsgemäße Inertisierung und/oder Flutung überwacht werden, wobei die Pulverabsaugeinrichtungen von den Transportmitteln (15) von den zu den Bauvorrichtungen bringbar und an diese zum Absaugvorgang ansetzbar sind.

## Claims

1. Production system (1) for the simultaneous, generative manufacturing of several components (2) by means of a selective laser sintering or laser melting technique, wherein the following are provided in at least one production processing area (3):
- at least two jigs in the form of SLM and/or SLS units (4), each of which is provided at least with one construction container (5) that is removable from a process chamber of the units;
- at least one extraction station (6) for unpacking a finished component (2) from one of the construction containers (5);
- at least one post-processing station (7) for the thermal and/or surface mechanical post-treatment of finished, extracted components (2); and
- at least one storage area (8) for storing the components (2);
- self-driven transport units (15), steerable and controllable by means of the production system control unit (10); and
- a production system control unit (10) to which the jigs, the extraction station (6), and the post-processing stations (7) are connected and which is designed to control the units or stations, and query the operating status and temporal availability of the units or stations, and query the quantities and types of building materials available for the jigs;
- wherein either the construction containers (5) and/or the finished components (2) removed from them or the building slabs (40) to be inserted into the construction containers (5) are picked up automatically by the transport units (15), steerable and controllable by means of the production system control unit (10), and transported to a fixture or station, where they are either placed into a process chamber and locked automatically, or placed into a post-processing station (7), wherein
- the construction container (5) or the components (2) are automatically removed, after completion of a generative building process, by a self-driven means of transport (15) with automatic unlocking and driven program-controlled to an interim storage station or extraction station (6), and placed into it, and
- wherein the construction containers (5) or components (2) or building slabs (40) are fastened by at least one coupling fixture (20) on or to the transport units (15) and interlocked with locking elements of a jig, a post-processing station (7) or a height-adjustable carrier (41) of a construction container (5), and the coupling fixture (20) between transport unit (15) and construction container (5), component (2) or building slab (40) is loosened program-controlled, wherein
the transport units (15) are designed as either transport carriages (15a) or aerial transport vehicles (15b).

2. Production system according to claim 1, **characterised in that** the production system control unit (10) is provided with an input device (25) and/or a display (26), wherein control data for the entirety of the jigs, extraction stations (6), post-processing stations (7) existing in the production system (1) can be entered by means of the input device (25), and wherein the data that is specific to both the production system of the complete production system (1) as well as its individual components can be displayed on the display (26).

3. Production system according to claim 1 or 2, **characterised in that** each self-driven transport unit (15) is provided with electronic coding that can be read by the jigs, the extraction station (6), the post-processing station (7), and/or the production system control unit (10).

4. Production system according to one of the foregoing claims, **characterised in that** the production system control unit (10) with a receiver device by means of which the data specific to the work piece, which is sent by the construction containers (5), can be read.

5. Production system according to one of the foregoing claims, **characterised in that** the production system control unit (10) controls the self-driven transport units (15) for the transport of the construction containers (5) dependent on the work piece data.

6. Production system according to one of the foregoing claims, **characterised in that** it comprises a multitude of self-driven transport units (15), wherein at least a part of these transport units (15) is equipped with pick-up or storage devices or coupling units for unpacked components.

7. Production system according to one of the foregoing claims, **characterised in that** the jigs of the production system (1) are embodied without separate input and display devices.

8. Production system according to one of the foregoing claims, **characterised in that** the production system control unit (10) is provided with a device querying availability for the units existing in the production system (1) and the self-driven transport units (15), the construction containers (5) coupled to them or components (2) are controlled automatically by the production system control unit (10), depending on an availability check of the devices existing in the production system (1).

9. Production system according to one of the foregoing claims, **characterised in that** the production system control unit (10) monitors the fill level of dosing and/or storage tanks (30) of building material (2) in the jigs while being designed to set off a refill control signal to the refill units, which are connected to the devices or which can be driven to them by means of the transport units (15).

10. Production system according to one of the foregoing claims, **characterised in that** the production system control unit (10) is connected to a building slab handling and adjustment device by means of which building slabs (40) are placed and fastened fully automatically on height-adjustable carriers (41) of construction containers (5) and adjusted into a target positioning.

11. Production system according to one of the foregoing claims, **characterised in that** the data of different building slabs (40) are stored in the production system control unit (10).

12. Production system according to one of the foregoing claims, **characterised in that** thermal data regarding the melting process in each SLM system are stored and displayed in the production system control unit (10).

13. Production system according to one of the foregoing claims, **characterised in that** the transport units (15) of the production system (1) are guided by means of a hall GPS system.

14. Production system according to one of the foregoing claims, **characterised in that** powder suction units integrated or used in the production system are connected to the production system control unit and monitored by it for correct inertisation and/or flooding, wherein the powder suction units can be moved by the transport units (15) from and to the jigs and be placed on them for the extraction by suction process.

## Revendications

1. Unité de production (1) pour la fabrication générative simultanée de plusieurs composants (2) au moyen de procédés de frittage laser sélectifs ou de procédés de fusion laser, dans laquelle, dans au moins une zone de traitement de production (3), sont prévus :
- au moins deux dispositifs de construction sous la forme de dispositifs SLM et/ou SLS (4), qui comprennent chacun au moins un contenant de construction (5) pouvant être extrait d'une chambre de processus des dispositifs,
- au moins une station d'extraction (6) pour le déballage d'un composant fini (2) à partir d'un des contenants de construction (5) ;
- au moins une station de post-traitement (7) pour le post-traitement thermique et/ou mécanique de surface de composants finis extraits (2), et
- au moins une zone de stockage (8) pour le stockage des composants (2),
- des moyens de transport (15) auto-entraînés et dirigeables et commandables par le dispositif de commande d'unité de production (10), ainsi que
- un dispositif de commande d'unité de production (10), à laquelle sont raccordés les dispositifs de construction, la station d'extraction (6) et les stations de post-traitement (7), et qui est configuré pour la commande des dispositifs ou stations, ainsi que pour l'interrogation du statut d'exploitation et de la disponibilité temporelle des dispositifs ou stations, ainsi que pour l'interrogation des quantités et type de matériaux de construction disponibles dans les dispositifs de construction,
- soit les contenants de construction (5) et/ou les composants finis (2) enlevés de ceux-ci ou les plaques de construction (40) à utiliser dans les contenants de construction (5) étant automatiquement reçus par les moyens de transport (15) dirigés et commandés par le dispositif de commande d'unité de production (10), transportés jusqu'à un dispositif ou une station, y étant soit utilisés dans une chambre de processus et automatiquement verrouillés, soit utilisés dans une station de post-traitement (7),
- les contenants de construction (5) ou les composants (2) après la fin d'un processus de construction génératif étant automatiquement reçus par un moyen de transport auto-entraîné (15) avec déverrouillage automatique et conduits d'une manière commandée par programme jusqu'à une station de stockage intermédiaire ou une station d'extraction (6) et utilisés dans celle-ci, et
- les contenants de construction (5) ou les composants (2) ou les plaques de construction (40) étant fixés par l'intermédiaire d'au moins un dispositif d'accouplement (20) sur ou au niveau des moyens de transport (15) et mis en prise avec des éléments de verrouillage d'un dispositif de construction, d'une station de post-traitement (7) ou d'un support ajustable en hauteur (41) d'un contenant de construction (5), et le dispositif d'accouplement (20) étant défait d'une manière commandée par programme entre les moyens de transport (15) et les contenants de construction (5), le composant (2) ou la plaque de construction (40)
- les moyens de transport (15) étant configurés soit sous la forme de wagons de transport (15a), soit sous la forme d'appareils de transport volants (15b).

2. Unité de production selon la revendication 1, **caractérisée en ce que** le dispositif de commande d'unité de production (10) comprend un dispositif d'entrée (25) et/ou un affichage (26), des données de commande pour la totalité des dispositifs de construction, stations d'extraction (6), stations de post-traitement (7) présents dans l'unité de production (1) pouvant être entrées par l'intermédiaire du dispositif d'entrée (25) et aussi bien des données spécifiques à l'unité de production de l'ensemble de l'unité de production (1) que de ses composants individuels pouvant être représentées sur l'affichage (26).

3. Unité de production selon la revendication 1 ou 2, **caractérisée en ce que** chaque moyen de transport auto-entraîné (15) comprend un code électronique lisible par les dispositifs de construction, la station d'extraction (6), la station de post-traitement (7) et/ou le dispositif de commande d'unité de production (10).

4. Unité de production selon l'une quelconque des revendications précédentes, **caractérisée en ce que** le dispositif de commande d'unité de production (10) est muni d'un appareil de réception, par lequel des données spécifiques à une pièce envoyées par les contenants de construction (5) peuvent être lues.

5. Unité de production selon l'une quelconque des revendications précédentes, **caractérisée en ce que** le dispositif de commande d'unité de production (10) commande les moyens de transport auto-entraînés (15) pour le transport des contenants de construction (5) en fonction des données de pièce.

6. Unité de production selon l'une quelconque des revendications précédentes, **caractérisée en ce qu'**elle comprend une pluralité de moyens de transport auto-entraînés (15), au moins une partie de ces moyens de transport (15) étant munis de dispositifs de réception ou de stockage ou d'appareils d'accouplement pour des composants déballés.

7. Unité de production selon l'une quelconque des revendications précédentes, **caractérisée en ce que** les dispositifs de construction de l'unité de production (1) sont configurés sans dispositifs d'entrée et d'affichage séparés.

8. Unité de production selon l'une quelconque des revendications précédentes, **caractérisée en ce que** le dispositif de commande d'unité de production (10) est muni d'un appareil de vérification de disponibilité pour les dispositifs contenus dans l'unité de production (1) et les moyens de transport auto-entraînés (15) des contenants de construction (5) ou composants (2) accouplés à ceux-ci sont commandés automatiquement par le dispositif de commande d'unité de production (10) en fonction d'une évaluation de disponibilité des dispositifs présents dans l'unité de production (1).

9. Unité de production selon l'une quelconque des revendications précédentes, **caractérisée en ce que** le dispositif de commande d'unité de production (10) surveille le niveau de remplissage de récipients de dosage et/ou de réserve (30) de matériau de construction (2) dans les dispositifs de construction et est configuré pour l'émission d'un signal de commande de remplissage pour les appareils de remplissage raccordés avec les dispositifs ou avec les moyens de transport (15) vers ces appareils de remplissage ajustables.

10. Unité de production selon l'une quelconque des revendications précédentes, **caractérisée en ce que** le dispositif de commande d'unité de production (10) est raccordé avec un appareil de manipulation et d'ajustement de plaques de construction, par lequel des plaques de construction (40) sont placées et fixées de manière entièrement automatique sur des supports ajustables en hauteur (41) de contenants de construction et sont ajustées dans une position de consigne.

11. Unité de production selon l'une quelconque des revendications précédentes, **caractérisée en ce que** les données de différentes plaques de construction (40) sont enregistrées dans le dispositif de commande d'unité de production (10).

12. Unité de production selon l'une quelconque des revendications précédentes, **caractérisée en ce que** des données thermiques concernant le processus de fusion sont stockées et représentées dans chaque unité SLM dans le dispositif de commande d'unité de production (10).

13. Unité de production selon l'une quelconque des revendications précédentes, **caractérisée en ce que** les moyens de transport (15) de l'unité de production (1) sont commandés par un système Hallen-GPS.

14. Unité de production selon l'une quelconque des revendications précédentes, **caractérisée en ce que** des appareils d'aspiration de poudre intégrés ou utilisés dans l'unité de production sont raccordés au dispositif de commande d'unité de production et surveillés par celui-ci pour vérifier une inertisation conforme et/ou une inondation, les appareils d'aspiration de poudre pouvant être amenés aux dispositifs de construction par les moyens de transport (15) et pouvant être raccordés à ceux-ci pour le processus d'aspiration.
